# EUROPEAN PATENT SPECIFICATION

(11) **EP 4 299 476 B1**
(45) Date of publication and mention of the grant of the patent: **07.10.2026**
(21) Application number: 22778558.1
(22) Date of filing: 15.03.2022
(51) Int. Cl.: B65G 1/04, B65G 47/74, B65G 1/02

(54) **MATERIAL CONVEYING METHOD AND DEVICE**
MATERIALFÖRDERVERFAHREN UND -VORRICHTUNG
PROCÉDÉ ET DISPOSITIF DE TRANSPORT DE MATÉRIAU

(30) Priority: 31.03.2021 CN 202110352761
(43) Date of publication of application: 03.01.2024
(73) Proprietor: Shenzhen Kubo Software Co., Ltd, Shenzhen, Guangdong 518100 (CN); Hai Robotics Co., Ltd., Shenzhen, Guangdong 518000 (CN)
(72) Inventor: ZHOU, Hongxia, Shenzhen, Guangdong 518100 (CN); ZHU, Kailei, Shenzhen, Guangdong 518000 (CN)
(74) Representative: Gulde & Partner
(86) International application number: PCT/CN2022/081006
(87) International publication number: WO 2022/206375

(56) References cited:
- WO-A1-2022/206263
- CN-A- 106 927 179
- CN-A- 108 313 606
- CN-A- 109 760 984
- CN-A- 110 270 973
- CN-A- 111 137 610
- CN-A- 111 620 024
- CN-A- 111 792 260
- CN-A- 111 977 244
- CN-A- 113 071 840
- CN-A- 113 071 846
- CN-U- 210 213 640
- CN-U- 215 045 876
- US-A1- 2020 209 865

## Description

### TECHNICAL FIELD

Embodiments of this application relate to the field of material carrying technologies, and in particular, to a material conveying method and device.

### BACKGROUND

Intelligent warehousing is an important part of a logistics process. A robot can carry materials in replacement of a human and play an important role in the intelligent warehousing.

The robots can place the materials on a conveyor and convey the materials to a workstation through the conveyor. An operator in the workstation sorts the materials, the conveyor conveys the sorted materials from the workstation to a goods taking position, and the robot takes the materials from a goods taking position.

Therefore, in the conveying process of materials between the robot and the conveyor, shortening the movement distance of the goods taking or placing apparatus on the robot becomes an urgent problem to be solved.

A US patent application US20200209865A1, comprising the features of the preamble of claim 1 and the preamble of claim 10, discloses a delivery coordination system that uses an automated guided vehicle (AGV) to deliver items from a delivery vehicle. The system determines a future delivery based on a set of delivery entries, and the AGV retrieves the item from its storage location in the delivery vehicle and delivers it to a delivery point. The system can secure the AGV to the delivery vehicle and navigate it to the delivery point using information from the delivery vehicle's guidance system. The technical effects of the system include improved delivery efficiency, reduced labor costs, and improved customer satisfaction.

A Chinese patent CN210213640U discloses a circulating lifting device which is characterized by comprising a bracket, a lifting mechanism and a driving mechanism, wherein the driving belt is arranged on the bracket; the plurality of bearing frames are used for bearing goods, are respectively connected with the driving belt and move along with the driving belt; wherein the driving belt circularly moves along a closed track to drive the plurality of bearing frames to ascend and descend, so that the bearing frames correspond to target layers in the three-dimensional goods shelf, and the transfer of goods in the bearing frames is realized. The distance between the adjacent bearing frames in the multiple bearing frames is not larger than the layer distance of the three-dimensional goods shelf. A transverse moving unit is arranged at the bottom of the bearing frame and used for driving goods to transversely move so that the goods can be transferred to an external conveying belt or a three-dimensional goods shelf.

### SUMMARY

Embodiments of this application provide a material conveying method and device, to shorten a movement distance of a goods taking or placing apparatus on a robot. The invention is set out in the appended set of claims.

According to a first aspect, and as defined in claim 1, it is provided a material conveying method, applicable to an unloading device. The unloading device includes: a robot and a conveyor, where the robot includes at least one goods taking or placing apparatus and at least two first storage layers, and the conveyor includes a to-be-placed goods conveying layer and a to-be-taken goods conveying layer arranged in parallel from up to down; and
the method includes:
controlling the goods taking or placing apparatus to move in a direction perpendicular to the to-be-placed goods conveying layer and the to-be-taken goods conveying layer; and
controlling, when a material obtained from the to-be-taken goods conveying layer exists on the goods taking or placing apparatus, the goods taking or placing apparatus to place the material on an unoccupied storage layer reached by the goods taking or placing apparatus for the first time during the movement.

Optionally, the method further includes:
when no material exists on the at least one goods taking or placing apparatus, at least one unoccupied storage layer exists in the at least two first storage layers, and a material exists on the to-be-taken goods conveying layer, controlling a goods taking or placing apparatus to take the material from the to-be-taken goods conveying layer.

Optionally, the method further includes:
controlling, when a material obtained from the first storage layer exists on a goods taking or placing apparatus, the goods taking or placing apparatus to place the material on the to-be-placed goods conveying layer.

The storage layer reached by the goods taking or placing apparatus for the first time during the movement is a to-be-taken material storage layer, and a to-be-taken material exists on the to-be-taken material storage layer.

Optionally, the controlling the goods taking or placing apparatus to move in a direction perpendicular to the to-be-placed goods conveying layer and the to-be-taken goods conveying layer includes:
controlling the at least one goods taking or placing apparatus to alternately move in a first vertical direction and a second vertical direction, wherein the movement in the first vertical direction comprises moving from a start storage layer to an end storage layer, and the movement in the second vertical direction comprises moving from the end storage layer to the start storage layer, wherein in an initial state, the start storage layer is an uppermost layer of the at least two first storage layers, and the end storage layer is a lowermost layer of the at least two first storage layers; and
respectively updating the start storage layer and the end storage layer to an uppermost layer and a lowermost layer of a to-be-taken material storage layer after the material is placed on one of the first storage layers, wherein a to-be-taken material exists on the to-be-taken material storage layer.

Optionally, a temporary shelving unit is further arranged beside the conveyor, at least one second storage layer is arranged on the temporary shelving unit, and the at least one second storage layer is configured for the material taken from the to-be-taken goods conveying layer to be placed.

Optionally, the method further includes:
when a material exists on the to-be-taken goods conveying layer, no unoccupied storage layer exists in the at least two first storage layers, and an unoccupied storage layer exists in the second storage layers, controlling a goods taking or placing apparatus to take the material from the to-be-taken goods conveying layer and place the material on the unoccupied storage layer in the second storage layers.

Optionally, the method further includes:
when no material exists on the to-be-taken goods conveying layer, an unoccupied storage layer exists in the at least two first storage layers, and a material exists on the at least one second storage layer, controlling a goods taking or placing apparatus to take the material from the second storage layer and place the material on the unoccupied storage layer in the first storage layers.

Optionally, the method further includes:
when a material exists on the to-be-taken goods conveying layer and an unoccupied storage layer exists in the at least two first storage layers, controlling a goods taking or placing apparatus to take the material from the to-be-taken goods conveying layer and place the material on the unoccupied storage layer in the first storage layers.

According to a second aspect, and as defined in claim 10, it is provided an unloading device, including: a robot, a conveyor, and a controller, where the robot includes at least one goods taking or placing apparatus and at least two first storage layers, and the conveyor includes a to-be-placed goods conveying layer and a to-be-taken goods conveying layer arranged in parallel from up to down.

The controller is configured to: control the goods taking or placing apparatus to move in a direction perpendicular to the to-be-placed goods conveying layer and the to-be-taken goods conveying layer, and control, when a material obtained from the to-be-taken goods conveying layer exists on the goods taking or placing apparatus, the goods taking or placing apparatus to place the material on an unoccupied storage layer reached by the goods taking or placing apparatus for the first time during the movement.

Optionally, the controller is further configured to:
control, when no material exists on the goods taking or placing apparatus, at least one unoccupied storage layer exists in the at least two first storage layers, and a material exists on the to-be-taken goods conveying layer, the goods taking or placing apparatus to take the material from the to-be-taken goods conveying layer.

Optionally, the controller is further configured to:
control, when a material obtained from the first storage layer exists on the goods taking or placing apparatus, the goods taking or placing apparatus to place the material on the to-be-placed goods conveying layer.

The storage layer reached by the goods taking or placing apparatus for the first time during the movement is a to-be-taken material storage layer, and a to-be-taken material exists on the to-be-taken material storage layer.

Optionally, the controller is further configured to:
control the goods taking or placing apparatus to alternately move in a first vertical direction and a second vertical direction, where the movement in the first vertical direction includes: moving from a start storage layer to an end storage layer, and the movement in the second vertical direction includes: moving from the end storage layer to the start storage layer, where in an initial state, the start storage layer and the end storage layer are respectively an uppermost layer and a lowermost layer of the at least two first storage layers; and
respectively update the start storage layer and the end storage layer to an uppermost layer and a lowermost layer of a to-be-taken material storage layer after the material is placed on one of the first storage layers, where a to-be-taken material exists on the to-be-taken material storage layer.

Optionally, a temporary shelving unit is further arranged beside the conveyor, at least one second storage layer is arranged on the temporary shelving unit, and the second storage layer is configured for the material taken from the to-be-taken goods conveying layer to be placed.

Optionally, the controller is further configured to:
control, when a material exists on the to-be-taken goods conveying layer, no unoccupied storage layer exists in the at least two first storage layers, and an unoccupied storage layer exists in the second storage layers, the goods taking or placing apparatus to take the material from the to-be-taken goods conveying layer and place the material on the unoccupied storage layer in the second storage layers.

Optionally, the controller is further configured to:
control, when no material exists on the to-be-taken goods conveying layer, an unoccupied storage layer exists in the at least two first storage layers, and a material exists on the at least one second storage layer, the goods taking or placing apparatus to take the material from the second storage layer and place the material on the unoccupied storage layer in the first storage layers.

Optionally, the controller is further configured to:
control, when a material exists on the to-be-taken goods conveying layer and an unoccupied storage layer exists in the at least two first storage layers, the goods taking or placing apparatus to take the material from the to-be-taken goods conveying layer and place the material on the unoccupied storage layer in the first storage layers.

According to a third aspect, and as defined in claim 11, it is provided a computer-readable storage medium.

According to a fourth aspect, not being part of the invention, a computer program is mentioned. The computer program may be configured to implement the method according to the first aspect.

The material conveying method and device provided in the embodiments of this application are applicable to an unloading device that includes a robot and a conveyor. The robot includes at least one goods taking or placing apparatus and at least two first storage layers, and the conveyor includes a to-be-placed goods conveying layer and a to-be-taken goods conveying layer arranged in parallel from up to down. According to the embodiments of this application, the goods taking or placing apparatus may be controlled to move in a direction perpendicular to the to-be-placed goods conveying layer and the to-be-taken goods conveying layer. When a material obtained from the to-be-taken goods conveying layer exists on the goods taking or placing apparatus, the goods taking or placing apparatus is controlled to place the material on an unoccupied storage layer reached by the goods taking or placing apparatus for the first time during the movement. Upon completion of placement of the goods on the first storage layers, the robot immediately leaves the conveyor or waits for a period of time before leaving. In this way, an unoccupied storage layer may exist in the first storage layers, but the materials do not occupy all of the first storage layers. In this case, the goods taking or placing apparatus places the material on the unoccupied storage layer reached for the first time during the movement, which means that the goods taking or placing apparatus may try to place the material on the first storage layer that can be reached by the goods taking or placing apparatus after moving a small distance, and the storage layer that can be reached by the goods taking or placing apparatus after movement by a large distance is vacated, which can help reduce the movement distance of the goods taking or placing apparatus.

### BRIEF DESCRIPTION OF THE DRAWINGS

In order to describe the technical solutions in embodiments of this application or the related art more clearly, the following briefly describes the accompanying drawings required for describing the embodiments or the related art. Apparently, the accompanying drawings in the following description show some embodiments of this application, and those of ordinary skill in the art may still derive other accompanying drawings from the accompanying drawings without creative efforts.
FIG. 1 exemplarily shows a side view of an unloading device according to an embodiment of this application.
FIG. 2 exemplarily shows a top view of a robot in an unloading device according to an embodiment of this application.
FIG. 3 exemplarily shows a top view of a conveyor in an unloading device according to an embodiment of this application.
FIG. 4 exemplarily shows a top view of a goods taking or placing apparatus of a robot according to an embodiment of this application.
FIG. 5 exemplarily shows a top view of a connecting apparatus in a conveyor according to an embodiment of this application.
FIG. 6 and FIG. 7 exemplarily show side views of the connecting apparatus in FIG. 5 in two states.
FIG. 8 exemplarily shows a top view of another connecting apparatus in a conveyor according to an embodiment of this application.
FIG. 9 and FIG. 10 exemplarily show side views of the connecting apparatus in FIG. 8 in two states.
FIG. 11 exemplarily shows a flowchart of steps of a material conveying method according to an embodiment of this application.

### DETAILED DESCRIPTION

In order to make the objectives, technical solutions, and advantages of the embodiments of this application clearer, the technical solutions in the embodiments of this application will be clearly and completely described with reference to the accompanying drawings in the embodiments of this application. Obviously, the described embodiments are parts of the embodiments of this application, but not all of the embodiments. All other embodiments obtained by a person of ordinary skill in the art based on the embodiments of this application without creative efforts shall fall within the protection scope of this application.

This application may be applied to a material carrying scenario. The material may include but is not limited to: goods and a logistics crate. The material is usually stored on a plurality of shelving units in a warehouse. When the material needs to be shipped from the warehouse, the material may be taken from the shelving unit of the warehouse and placed in the conveyor by a robot. The conveyor may convey the material to a workbench so that the workbench can pick the material, and the picked material is the shipped material. The remaining material may be conveyed to the robot by the conveyor, so that the robot can put the material back on the shelving unit of the warehouse.

Embodiments of this application provide a material conveying method and device, so that a goods taking or placing apparatus can place a material on an unoccupied storage layer reached for the first time during movement. Upon completion of placement of the goods on the first storage layers, the robot immediately leaves the conveyor or waits for a period of time before leaving. In this way, an unoccupied storage layer may exist in the first storage layers, but the materials do not occupy all of the first storage layers. In this case, the goods taking or placing apparatus places the material on the unoccupied storage layer reached for the first time during the movement, which means that the goods taking or placing apparatus may try to place the material on the first storage layer that can be reached by the goods taking or placing apparatus after moving a small distance, and the storage layer that can be reached by the goods taking or placing apparatus after movement by a large distance is vacated, which can help reduce the movement distance of the goods taking or placing apparatus.

A material conveying method provided in an embodiment of this application may be applied to an unloading device.

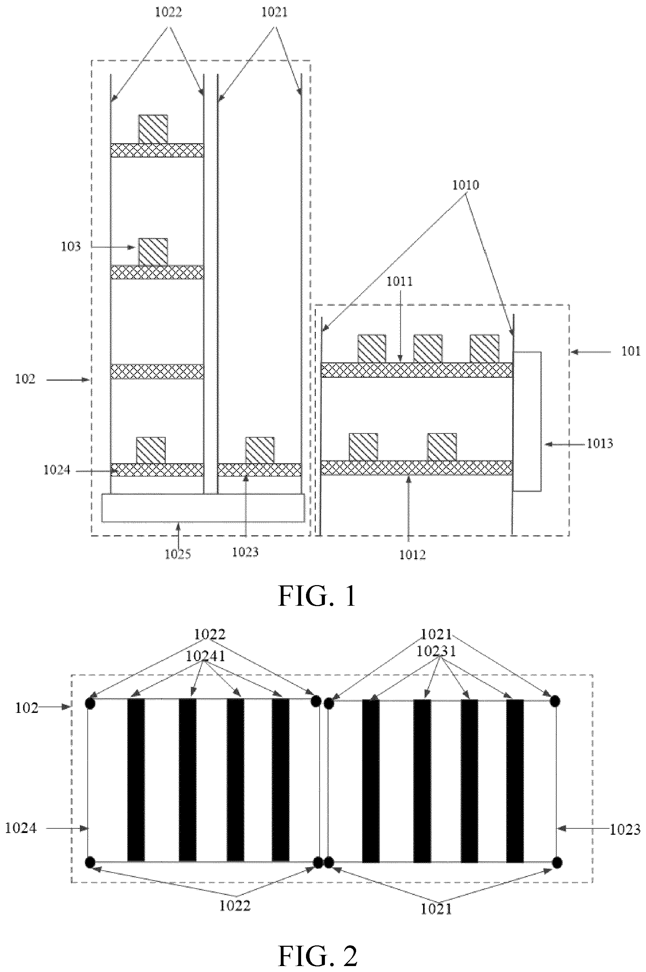

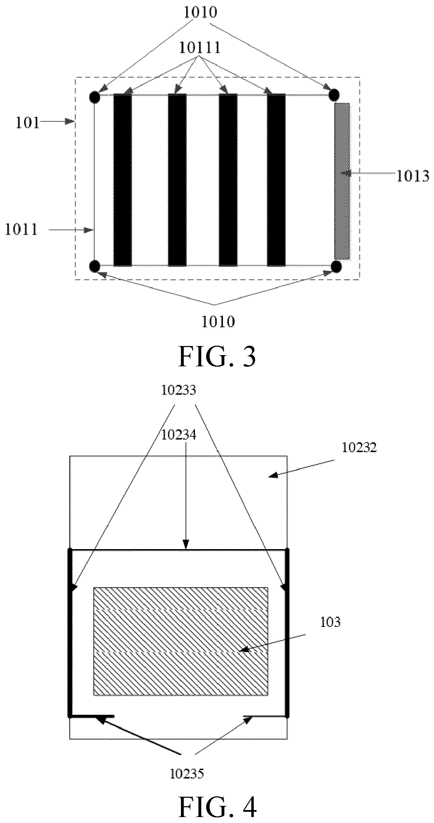

FIG. 1 exemplarily shows a side view of an unloading device according to an embodiment of this application. FIG. 2 exemplarily shows a top view of a robot 102 in an unloading device according to an embodiment of this application. FIG. 3 exemplarily shows a top view of a conveyor 101 in an unloading device according to an embodiment of this application. In FIG. 1, for ease of illustration, a set distance is defined between the conveyor 101 and the robot 102. In practical application, when a material 103 is conveyed between the conveyor and the robot, the distance is less than a preset threshold, to prevent the material 103 from falling down between the conveyor and the robot.

As shown in FIG. 1 to FIG. 3, the unloading device includes the conveyor 101 and the robot 102. The conveyor 101 includes a to-be-placed goods conveying layer 1011 and a to-be-taken goods conveying layer 1012 arranged in parallel from up to down. The robot 102 includes at least one goods taking or placing apparatus 1023 and at least two first storage layers 1024.

It may further be seen from FIG. 1 that the robot 102 further has a chassis 1025 configured to move the robot 102.

In addition, FIG. 1 further exemplarily shows a support frame 1022 configured to support the first storage layers 1024, a support frame 1021 configured to support the goods taking or placing apparatus 1023, and a support rod 1010 configured to support the to-be-taken goods conveying layer 1012 and the to-be-placed goods conveying layer 1011. As shown in FIG. 2, the support frame 1021 is located around the goods taking or placing apparatus 1023, and the support frame 1022 is located around the first storage layer 1024. As shown in FIG. 3, the support frame 1010 is located around the to-be-placed goods conveying layer 1011 and the to-be-taken goods conveying layer 1012. In this way, the support frame 1021 may be prevented from affecting the taking and placing of the material 103 on the goods taking or placing apparatus 1023. The support frame 1022 may be prevented from affecting the taking and placing of the material 103 on the first storage layer 1024. The support frame 1010 may be prevented from affecting the taking and placing of the material 103 on the to-be-placed goods conveying layer 1011 and the to-be-taken goods conveying layer 1012. Certainly, positions and a quantity of the support frames 1010, the support frames 1021, and the support frames 1022 may be flexibly set, so as not to affect the taking and placing of the material 103.

The goods taking or placing apparatus 1023 is movable in a first direction of the support frame 1021, and the first direction is perpendicular to the to-be-placed goods conveying layer 1011 and the to-be-taken goods conveying layer 1012. The goods taking or placing apparatus 1023 is configured to place, on the to-be-placed goods conveying layer 1011, the material on the first storage layer 1024, or place, on the first storage layer 1024, the material on the to-be-taken goods conveying layer 1012.

It may be learned that the first direction is a height direction of the robot 102. FIG. 1 exemplarily shows four first storage layers 1024. In practical application, a quantity of first storage layers 1024 may be flexibly changed, which is not limited in this embodiment of this application.

It can be seen from FIG. 2 that a transfer mechanism 10231 may be arranged on the goods taking or placing apparatus 1023, and a transfer mechanism 10241 is arranged on the first storage layer 1024. The transfer mechanism 10231 and the transfer mechanism 10241 are configured to convey the material 103 through rotation.

Certainly, in addition to the structure of the goods taking or placing apparatus 1023 shown in FIG. 2, the goods taking or placing apparatus 1023 may further be shown in FIG. 4. As shown in FIG. 4, the goods taking or placing apparatus 1023 includes a tray 10232, a telescopic arm 10233, a fixed push rod 10234, and a movable push rod 10235. The fixed push rod 10234 and the movable push rod 10235 are both mounted to the telescopic arm 10233.

The tray 10232 is configured for the material 103 to be placed, and the tray 10232 may be a flat plate horizontally arranged.

The telescopic arm 10233 is stretchable or retractable. When the telescopic arm 10233 is stretched, the movable push rod 10235 is retracted to an inner side of the telescopic arm 10233, and the fixed push rod 10234 is stretched accordingly to push the material 103 out of the tray 10232. When the telescopic arm 10233 is retracted, the fixed push rod 10234 is retracted accordingly, the movable push rod 10235 is stretched to be perpendicular to the telescopic arm 10233, and the movable push rod 10235 pulls the material 103 onto the tray 10232.

In practical application, the structure of the goods taking or placing apparatus may be selected according to an actual application scenario, which is not limited in this application. It may further be seen from FIG. 3 that a transfer mechanism 10111 is arranged on the to-be-placed goods conveying layer 1011 and is configured to convey the material 103 through rotation. It may be understood that when the to-be-taken goods conveying layer 1012 is located above the to-be-placed goods conveying layer 1011, a structure of the to-be-taken goods conveying layer 1012 is seen in the top view shown in FIG. 3. The structure of the to-be-taken goods conveying layer 1012 is the same as the structure of the to-be-placed goods conveying layer 1011. The details are not described herein again.

Optionally, the goods taking or placing apparatus 1023, the first storage layer 1024, the to-be-placed goods conveying layer 1011, and the to-be-taken goods conveying layer 1012 convey the material 103 at the same speed.

It may be understood that when the transfer mechanism is arranged on each of the goods taking or placing apparatus 1023, the first storage layer 1024, the to-be-placed goods conveying layer 1011, and the to-be-taken goods conveying layer 1012, these transfer mechanisms rotate at the same speed.

The goods taking or placing apparatus 1023, the first storage layer 1024, the to-be-placed goods conveying layer 1011, and the to-be-taken goods conveying layer 1012 convey the material 103 at the same speed. Therefore, different rotational speeds may be prevented from causing rollover of the material 103 during the conveying of the material 103 respectively by the goods taking or placing apparatus 1023, the first storage layer 1024, the to-be-placed goods conveying layer 1011, and the to-be-taken goods conveying layer 1012.

The conveyor 101 in the above unloading device is configured to convey the received material 103 to a workstation, and the remaining material 103 is conveyed after being picked by the workstation. The material 103 received by the conveyor 101 may be placed by the robot 102 or an unloader, and the conveyor 101 may convey the remaining material 103 to the robot 102 or the unloader.

A first end of the to-be-placed goods conveying layer 1011 of the conveyor 101 is used for the material 103 to be placed, and a first end of the to-be-taken goods conveying layer 1012 is used for the material 103 to be taken. The to-be-placed goods conveying layer 1011 is configured to convey the material 103 from the first end of the to-be-placed goods conveying layer 1011 to a second end of the to-be-placed goods conveying layer 1011. The to-be-taken goods conveying layer 1012 is configured to convey the material 103 from the second end of the to-be-taken goods conveying layer 1012 to the first end of the to-be-taken goods conveying layer 1012.

In addition to the to-be-placed goods conveying layer 1011 and the to-be-taken goods conveying layer 1012, the conveyor 101 further includes a connecting apparatus 1013 configured to convey the material 103 from the second end of the to-be-placed goods conveying layer 1011 to the second end of the to-be-taken goods conveying layer 1012.

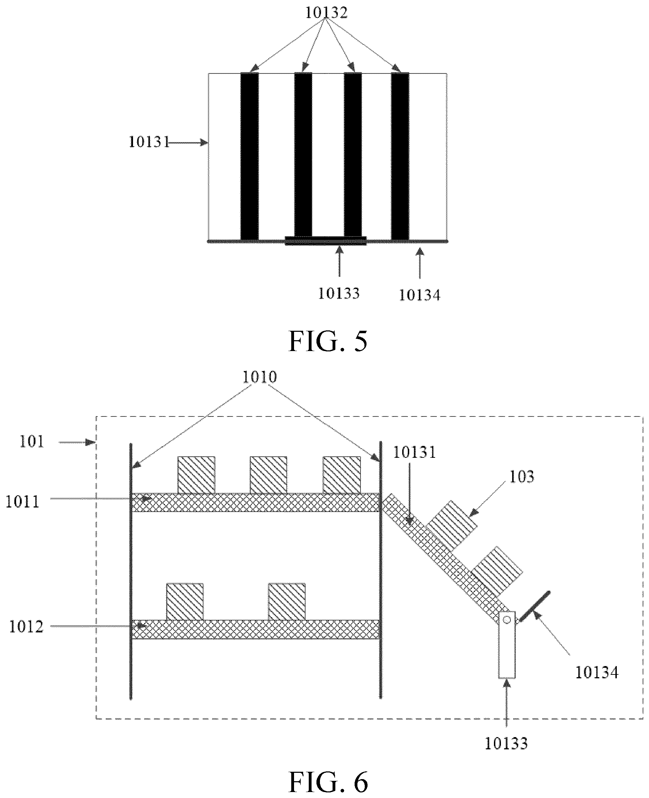

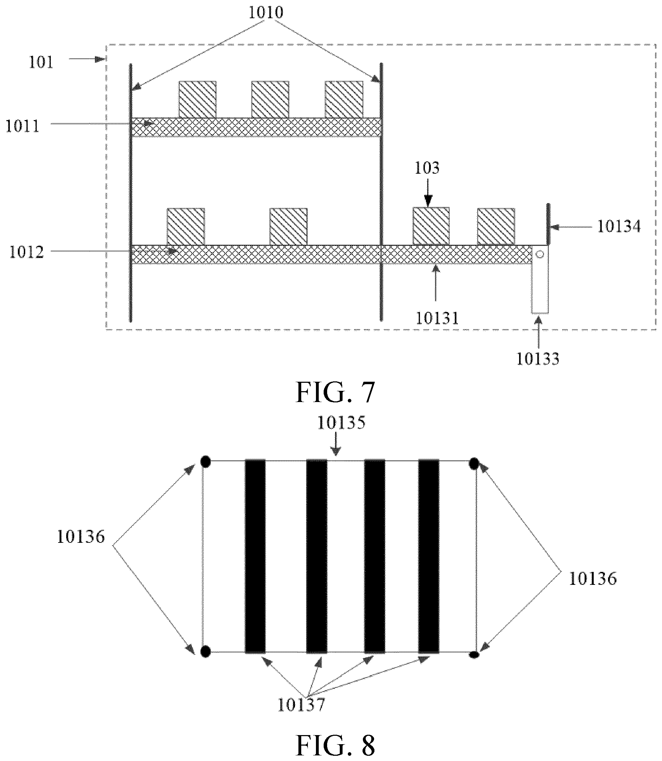

FIG. 5 exemplarily shows a top view of a connecting apparatus 1013 in a conveyor 101 according to an embodiment of this application. FIG. 6 and FIG. 7 exemplarily show side views of the connecting apparatus 1013 corresponding to FIG. 5 in two connection states. As shown in FIG. 5, the connecting apparatus 1013 includes a third storage layer 10131, a transfer mechanism 10132, and a rotary fixing apparatus 10133. A first end of the third storage layer 10131 is rotatably connected to the rotary fixing apparatus 10133, and the third storage layer 10131 is moved between the second end of the to-be-placed goods conveying layer 1011 and the second end of the to-be-taken goods conveying layer 1012. The transfer mechanism 10132 is arranged on the third storage layer 10131 configured to convey the material 103.

As shown in FIG. 6, a second end of the third storage layer 10131 is connected to the second end of the to-be-placed goods conveying layer 1011. As shown in FIG. 7, the second end of the third storage layer 10131 is connected to the second end of the to-be-taken goods conveying layer 1012.

In FIG. 5, the material 103 may be placed on the transfer mechanism 10132 to convey the material 103 through rotation of the transfer mechanism 10132. A rotation direction of the transfer mechanism 10132 can be changed.

The rotary fixing apparatus 10133 may be configured to fix the first end of the third storage layer 10131 so that the first end cannot be moved, and the third storage layer 10131 may be rotated around the rotary fixing apparatus 10133 and perpendicular to a direction of the third storage layer 10131. During the rotation of the third storage layer 10131, the second end of the third storage layer 10131 moves accordingly to be switched between the second end of the to-be-taken goods conveying layer 1012 and the second end of the to-be-placed goods conveying layer 1011. That is to say, the second end of the third storage layer 10131 may be docked with the second end of the to-be-taken goods conveying layer 1012, may be connected to the second end of the to-be-placed goods conveying layer 1011 instead, or may be connected to the second end of the to-be-taken goods conveying layer 1012 instead.

As shown in FIG. 5, FIG. 6, and FIG. 7, in order to prevent the material 103 on the third storage layer 10131 from slipping, a baffle 10134 may further be arranged at the first end of the third storage layer 10131.

In order to realize the movement of the third storage layer 10131 between the second end of the to-be-placed goods conveying layer 1011 and the second end of the to-be-taken goods conveying layer 1012, three manners may be adopted.

In a first manner, the third storage layer 10131 moves between the second end of the to-be-placed goods conveying layer 1011 and the second end of the to-be-taken goods conveying layer 1012 through the elastic force thereof and gravity of the material 103 on the third storage layer.

When no material 103 exists on the third storage layer 10131 due to the elastic force thereof, the second end of the third storage layer 10131 is connected to the second end of the to-be-placed goods conveying layer 1011. After the material 103 on the to-be-placed goods conveying layer 1011 is conveyed to the third storage layer 10131, the gravity of the material 103 causes the second end of the third storage layer 10131 to descend to be connected to the second end of the to-be-taken goods conveying layer 1012. After the material 103 on the third storage layer 10131 is conveyed to the to-be-taken goods conveying layer 1012, the second end of the third storage layer 10131 moves back to the second end of the to-be-placed goods conveying layer 1011. Such a cycle is repeated.

According to this embodiment of this application, the second end of the third storage layer 10131 can be moved through the elastic force thereof and the gravity of the material 103 without using other control structures or components, which can help simplify the structure of the third storage layer 10131.

In a second manner, in addition to the third storage layer 10131, the transfer mechanism 10132, and the rotary fixing apparatus 10133, the connecting apparatus 1013 further includes a second controller and a material quantity detection apparatus. The material quantity detection apparatus is configured to detect a material quantity on the third storage layer 10131. The second controller is configured to: control the second end of the third storage layer 10131 to be connected to the second end of the to-be-taken goods conveying layer 1012 when the material quantity on the third storage layer 10131 is greater than or equal to a preset material quantity threshold, or control the second end of the third storage layer 10131 to be connected to the second end of the to-be-placed goods conveying layer 1011 when the material quantity on the third storage layer 10131 is less than the preset material quantity threshold.

The material quantity may be a weight of the material 103 or a quantity of materials 103. Accordingly, the material quantity detection apparatus may be a pressure sensor or an image acquisition apparatus.

The pressure sensor may be arranged at a bottom of the third storage layer 10131 to detect a pressure that the material 103 on the third storage layer 10131 applies to the third storage layer 10131. The pressure is the weight of the material 103.

The image acquisition apparatus faces the third storage layer 10131 to collect an image of the material 103 on the third storage layer 10131, and identify the quantity of materials 103 from the image of the material 103.

The material quantity detection apparatus is electrically connected to the second controller to send the material quantity to the second controller. The second controller may control the movement of the third storage layer 10131 according to the material quantity. In addition, when the material quantity detection apparatus is the image acquisition apparatus, the image acquisition apparatus may further send the image of the material 103 to the second controller, so that the second controller can identify the quantity of materials 103 and control the movement of the third storage layer 10131.

In a third manner, in addition to the third storage layer 10131, the transfer mechanism 10132, and the rotary fixing apparatus 10133, the connecting apparatus 1013 further includes a second controller configured to control the second end of the third storage layer 10131 to be alternately connected to the second end of the to-be-taken goods conveying layer 1012 and the second end of the to-be-placed goods conveying layer 1011 respectively at a preset time period.

The preset time period may be determined according to conveying speeds of the to-be-taken goods conveying layer 1012 and the to-be-placed goods conveying layer 1011. When the conveying speed is relatively large, the preset time period may be set to a relatively small value. When the conveying speed is relatively small, the preset time period may be set to a relatively large value.

Further, the preset time period may be further determined according to the conveying speed and a length of the third storage layer 10131. When the conveying speed is constant, the preset time period may be set to a relatively large value if the length of the third storage layer 10131 is relatively large, and the preset time period may be set to a relatively small value if the length of the third storage layer 10131 is relatively small.

In practical application, a functional relationship among the preset time period, the conveying speed, and the length of the third storage layer 10131 may be constructed based on experience. For example, the functional relationship may be a linear function, which may be a linear function of a ratio of the length of the third storage layer 10131 to the conveying speed.

After the preset time period is determined according to the above method, the second end of the third storage layer 10131 may be caused to be alternately connected to the second end of the to-be-taken goods conveying layer 1012 and the second end of the to-be-placed goods conveying layer 1011 respectively according to the preset time period. For example, when the preset time period is 1 minute, the second end of the third storage layer 10131 may be caused to be connected to the second end of the to-be-taken goods conveying layer 1012 within a first minute, the second end of the third storage layer 10131 may be caused to be connected to the second end of the to-be-placed goods conveying layer 1011 within a second minute, and the second end of the third storage layer 10131 may be caused to be connected to the second end of the to-be-taken goods conveying layer 1012 within a third minute. Such a cycle is repeated.

It should be noted that, in the above three manners, when the second end of the third storage layer 10131 is connected to the second end of the to-be-placed goods conveying layer 1011, a conveying direction of the third storage layer 10131 faces away from the to-be-placed goods conveying layer 1011, so that the material 103 is conveyed to the third storage layer 10131 from the to-be-placed goods conveying layer 1011. When the second end of the third storage layer 10131 is connected to the second end of the to-be-taken goods conveying layer 1012, the conveying direction of the third storage layer 10131 faces the to-be-taken goods conveying layer 1012, so that the material 103 is conveyed to the to-be-taken goods conveying layer 1012 from the third storage layer 10131. Therefore, after the second end of the third storage layer 10131 is switched between the second end of the to-be-placed goods conveying layer 1011 and the second end of the to-be-taken goods conveying layer 1012, the rotation direction of the transfer mechanism 10132 needs to be switched, and the rotation directions before and after the switching are opposite.

In order to move the second end of the third storage layer 10131, the second controller may be electrically connected to the rotary fixing apparatus 10133, so that the rotary fixing apparatus 10133 rotates the third storage layer 10131. The rotation direction and angle are preset.

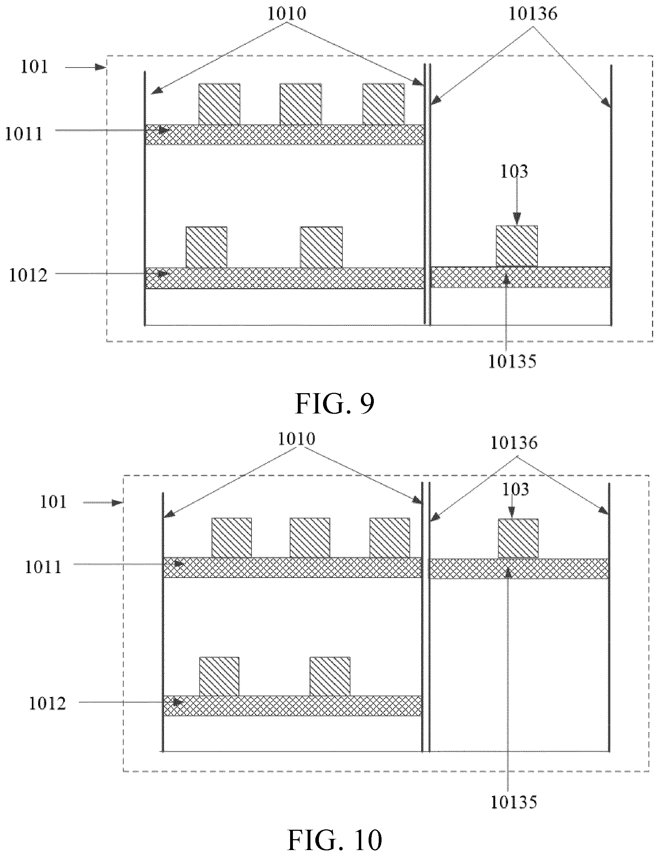

FIG. 8 exemplarily shows a top view of another connecting apparatus 1013 in a conveyor 101 according to an embodiment of this application. FIG. 9 and FIG. 10 exemplarily show side views of the connecting apparatus 1013 corresponding to FIG. 8 in two states. The connecting apparatus 1013 in FIG. 8 to FIG. 10 is an elevator.

It can be seen from FIG. 8 that the elevator includes four support frames 10136 and a fourth storage layer 10135 arranged on the support frame 10136. A transfer mechanism 10137 is arranged on the fourth storage layer 10135, and the transfer mechanism 10137 may convey the material 103 through rotation.

As shown in FIG. 9 or FIG. 10, the fourth storage layer 10135 can slide from up to down along the support frame 10136. The fourth storage layer may be docked with the second end of the to-be-placed goods conveying layer 1011 or the second end of the to-be-taken goods conveying layer 1012 during the sliding from up to down. In FIG. 9, the second end of the fourth storage layer 10135 is docked with the second end of the to-be-taken goods conveying layer 1012. In FIG. 10, the second end of the fourth storage layer 10135 is docked with the second end of the to-be-placed goods conveying layer 1011. In this way, the material 103 is obtained from the second end of the to-be-placed goods conveying layer 1011 during the second end of the fourth storage layer docking with the second end of the to-be-placed goods conveying layer 1011. Then, the elevator slides down to be docked with the second end of the to-be-taken goods conveying layer 1012, so as to place the material 103 on the second end of the to-be-taken goods conveying layer 1012. Then the elevator slides upward again to be docked with the second end of the to-be-placed goods conveying layer 1011, to obtain the material 103 from the second end of the to-be-placed goods conveying layer 1011 again. Such a cycle is repeated.

It may be understood that when the second end of the fourth storage layer 10135 is docked with the second end of the to-be-placed goods conveying layer 1011, the rotation direction of the transfer mechanism 10137 on the fourth storage layer 10135 faces away from the to-be-placed goods conveying layer 1011. When the second end of the fourth storage layer 10135 is docked with the second end of the to-be-taken goods conveying layer 1012, the rotation direction of the transfer mechanism 10137 on the fourth storage layer 10135 faces the to-be-taken goods conveying layer 1012.

It should be noted that, the to-be-placed goods conveying layer 1011 shown in FIG. 9 or FIG. 10 is located above the to-be-taken goods conveying layer 1012. In practical application, the to-be-placed goods conveying layer 1011 may be further located below the to-be-taken goods conveying layer 1012.

The material conveying method and device of the embodiments of this application are described in detail below.

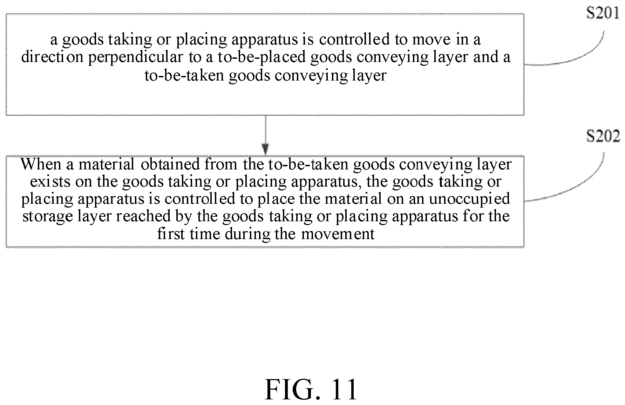

FIG. 11 exemplarily shows a flowchart of steps of a material conveying method according to an embodiment of this application. As shown in FIG. 11, the method includes the following steps.

S201: a goods taking or placing apparatus is controlled to move in a direction perpendicular to a to-be-placed goods conveying layer and a to-be-taken goods conveying layer.

The vertical direction includes a direction from the to-be-placed goods conveying layer to the to-be-taken goods conveying layer and a direction from the to-be-taken goods conveying layer to the to-be-placed goods conveying layer. The goods taking or placing apparatus moves along a support rod where the goods taking or placing apparatus is located, and the support rod is perpendicular to the to-be-taken goods conveying layer and the to-be-placed goods conveying layer. It may be learned that the vertical direction is the first direction as described above, and the vertical direction includes a first vertical direction and a second vertical direction. Since the to-be-taken goods conveying layer and the to-be-placed goods conveying layer are arranged in parallel from up to down, the first vertical direction and the second vertical direction are respectively upward and downward.

Optionally, the goods taking or placing apparatus may be controlled to alternately move in the first vertical direction and the second vertical direction. The movement in the first vertical direction includes moving from a start storage layer to an end storage layer, and the movement in the second vertical direction includes moving from the end storage layer to the start storage layer. In an initial state, the start storage layer is an uppermost layer of the at least two first storage layers, and the end storage layer is a lowermost layer of the at least two first storage layers. The start storage layer and the end storage layer are respectively updated to an uppermost layer and a lowermost layer of a to-be-taken material storage layer after the material is placed on one of the first storage layers. A to-be-taken material exists on the to-be-taken material storage layer.

It may be understood that after the material is placed on the first storage layer, the material cannot be placed on or taken from the first storage layer, thereby controlling the goods taking or placing apparatus no longer to move to the first storage layer. In this embodiment of this application, the material is generally placed on the successive first storage layers, so that the start storage layer and the end storage layer can be updated every time the material is placed on one of the first storage layers. The start storage layer and the end storage layer are respectively the uppermost layer and the lowermost layer of the first storage layers where the material can be taken from and placed on.

The goods taking or placing apparatus may move up and down. For example, the goods taking or placing apparatus may cyclically move as follows: move up a distance - move down a distance - ... - move up a distance.

S202: When a material obtained from the to-be-taken goods conveying layer exists on the goods taking or placing apparatus, the goods taking or placing apparatus is controlled to place the material on an unoccupied storage layer reached by the goods taking or placing apparatus for the first time during the movement.

The unoccupied storage layer is the first storage layer in an unoccupied state. The unoccupied storage layer may be the first storage layer on which no material is ever placed, and may be further the first storage layer from which the material is taken.

Optionally, when no material exists on the goods taking or placing apparatus, at least one unoccupied storage layer exists in the at least two first storage layers, and a material exists on the to-be-taken goods conveying layer, the goods taking or placing apparatus is controlled to take the material from the to-be-taken goods conveying layer.

According to the invention, the to-be-placed goods conveying layer conveys the material to a workstation, the workstation is configured to sort the material, and the sorted material continues to be conveyed by the to-be-taken goods conveying layer. If the material in the to-be-taken goods conveying layer cannot be taken away in time, the material on the to-be-taken goods conveying layer may be accumulated. As a result, the sorted material cannot be conveyed to the to-be-taken goods conveying layer, which affects the material sorting progress.

In this embodiment of this application, when the material exists on the to-be-taken goods conveying layer, priority may be given to taking goods from the to-be-taken goods conveying layer as long as no material exists on the goods taking or placing apparatus and an unoccupied storage layer exists in the first storage layers. In this way, the material may be prevented from being accumulated on the to-be-taken goods conveying layer, thereby avoiding the impact on the material sorting progress.

Further, when no material exists on the goods taking or placing apparatus and at least one unoccupied storage layer exists in the at least two first storage layers, a quantity of materials on the to-be-taken goods conveying layer may be detected. If the material quantity exceeds a preset material quantity threshold, the goods taking or placing apparatus may be controlled to take the material from the to-be-taken goods conveying layer. If the material quantity does not exceed the preset material quantity threshold, the goods taking or placing apparatus may be controlled to take a material from the to-be-taken goods conveying layer or take a material from the first storage layer.

According to the invention, when no material exists on the goods taking or placing apparatus, the goods taking or placing apparatus is controlled to take the material from a target material layer reached for the first time during the movement. The target material layer is the first storage layer or the to-be-taken goods conveying layer.

When no material exists on the goods taking or placing apparatus, the goods taking or placing apparatus may be configured to take the material. Specifically, the material may be taken from the first storage layer and placed on the to-be-placed goods conveying layer, or the material may be taken from the to-be-taken goods conveying layer and placed on the first storage layer. In this embodiment of this application, in order to further shorten the movement distance of the goods taking or placing apparatus, the goods taking or placing apparatus may be controlled to take the material from the target material layer reached for the first time during the movement.

Optionally, when no material exists on the goods taking or placing apparatus and no unoccupied storage layer exists in the at least two first storage layers, the goods taking or placing apparatus is controlled to take the material from the first storage layer reached for the first time during the movement.

It may be understood that when no unoccupied storage layer exists in the first storage layers, if the goods taking or placing apparatus takes the material from the to-be-taken goods conveying layer, the taken material cannot be placed on the first storage layer. Therefore, according to this embodiment of this application, in this scenario, the goods taking or placing apparatus is controlled to take the material from the first storage layer first. After the material is taken, it is determined whether a goods placing location of the to-be-placed goods conveying layer is unoccupied. If the goods placing location is unoccupied, the taken material is placed on the to-be-placed goods conveying layer. If the material exists on the goods placing location of the to-be-placed goods conveying layer, the determination is performed at regular intervals until the taken material is placed on the to-be-placed goods conveying layer.

Optionally, when a material obtained from the first storage layer exists on the goods taking or placing apparatus, the goods taking or placing apparatus is controlled to place the material on the to-be-placed goods conveying layer.

According to the invention, the storage layer reached by the goods taking or placing apparatus for the first time during the movement is a to-be-taken material storage layer, and a to-be-taken material exists on the to-be-taken material storage layer.

It should be noted that, the to-be-taken material is the material that needs to be placed on the to-be-placed goods conveying layer, which needs to be distinguished from the material taken from the to-be-taken goods conveying layer. After the material taken from the to-be-taken goods conveying layer is placed on the first storage layer, the material cannot be taken out from the first storage layer.

Optionally, a temporary shelving unit is further arranged beside the conveyor, at least one second storage layer is arranged on the temporary shelving unit, and the second storage layer is configured for the material taken from the to-be-taken goods conveying layer to be placed.

The robot may place, on one of the second storage layers of the temporary shelving unit, the material taken from the to-be-taken goods conveying layer of the conveyor through the goods taking or placing apparatus, and may further place, on the first storage layer, the material on the second storage layer through the goods taking or placing apparatus. When a transfer mechanism is arranged on the goods taking or placing apparatus, a transfer mechanism may also be arranged on the second storage layer to convey the material. When the goods taking or placing apparatus may push the material onto the second storage layer or pull up the material from the second storage layer, the transfer mechanism may not be arranged on the second storage layer.

It may be understood that when the material is accumulated on the to-be-taken goods conveying layer, the sorted material cannot be conveyed to the to-be-taken goods conveying layer. In this case, the sorting of the material needs to be suspended. According to this embodiment of this application, the material on the to-be-taken goods conveying layer may be placed on the temporary shelving unit, which can help avoid the accumulation of the material on the to-be-taken goods conveying layer, and further avoid the impact on the material sorting.

Optionally, when a material exists on the to-be-taken goods conveying layer, no unoccupied storage layer exists in the at least two first storage layers, and an unoccupied storage layer exists in the second storage layers, the goods taking or placing apparatus is controlled to take the material from the to-be-taken goods conveying layer and place the material on the unoccupied storage layer in the second storage layers.

It may be understood that when no unoccupied storage layer exists in the at least two first storage layers, the goods taking or placing apparatus cannot place, on the first storage layer, the material on the to-be-taken goods conveying layer. In this case, when an unoccupied storage layer exists in the second storage layers, the robot may first take the material from the to-be-taken goods conveying layer and place the material on the unoccupied storage layer in the second storage layers. Then the robot may place, on the to-be-placed goods conveying layer, the material on the first storage layer, and after an unoccupied storage layer exists in the first storage layers, the material is taken from the to-be-taken goods conveying layer and placed on the unoccupied storage layer in the first storage layers.

Further, when no unoccupied storage layer exists in the at least two first storage layers, the material on the to-be-taken goods conveying layer may be detected. If the material on the to-be-taken goods conveying layer exceeds the preset material quantity threshold and an unoccupied storage layer exists in the second storage layers, the goods taking or placing apparatus is controlled to take the material from the to-be-taken goods conveying layer and place the material on the unoccupied storage layer in the second storage layers. If the material on the to-be-taken goods conveying layer does not exceed the preset material quantity threshold, the goods taking or placing apparatus may be controlled to take the material from the to-be-taken goods conveying layer and place the material on the unoccupied storage layer in the second storage layers, or take the material from the first storage layer and place the material on the to-be-placed goods conveying layer.

Optionally, when no material exists on the to-be-taken goods conveying layer, an unoccupied storage layer exists in the at least two first storage layers, and a material exists on the at least one second storage layer, the goods taking or placing apparatus is controlled to take the material from the second storage layer and place the material on the unoccupied storage layer in the first storage layers.

When a material exists on the to-be-taken goods conveying layer and an unoccupied storage layer exists in the at least two first storage layers, the goods taking or placing apparatus is controlled to take the material from the to-be-taken goods conveying layer and place the material on the unoccupied storage layer in the first storage layers.

According to this embodiment of this application, the material may be taken from the to-be-taken goods conveying layer in advance. If no material exists on the to-be-taken goods conveying layer, the material is to be taken from a temporary storage layer. In this way, the accumulation of materials on the to-be-taken goods conveying layer can be avoided, thereby avoiding the impact on the material sorting.

Optionally, when the quantity of materials on the second storage layer exceeds the preset material quantity threshold, a plurality of robots may be controlled to take materials from the second storage layer. A preset quantity of unoccupied storage layers exists in the first storage layers of the robot. Ideally, all of the first storage layers of the robot are unoccupied storage layers.

An embodiment of this application further provides an unloading device, including: a robot, a conveyor, and a controller, where the robot includes at least one goods taking or placing apparatus and at least two first storage layers, and the conveyor includes a to-be-placed goods conveying layer and a to-be-taken goods conveying layer arranged in parallel from up to down. The controller is configured to: control the goods taking or placing apparatus to move in a direction perpendicular to the to-be-placed goods conveying layer and the to-be-taken goods conveying layer, and control, when a material obtained from the to-be-taken goods conveying layer exists on the goods taking or placing apparatus, the goods taking or placing apparatus to place the material on an unoccupied storage layer reached by the goods taking or placing apparatus for the first time during the movement.

Optionally, the controller is further configured to:
control, when no material exists on the goods taking or placing apparatus, at least one unoccupied storage layer exists in the at least two first storage layers, and a material exists on the to-be-taken goods conveying layer, the goods taking or placing apparatus to take the material from the to-be-taken goods conveying layer.

Optionally, the controller is further configured to:
control the goods taking or placing apparatus to take a material from a target material layer reached for the first time during the movement when no material exists on the goods taking or placing apparatus, where the target material layer is the first storage layer or the to-be-taken goods conveying layer.

Optionally, when the target material layer is the first storage layer, the controller is further configured to:
control the goods taking or placing apparatus to take a material from the first storage layer reached for the first time during the movement when no material exists on the goods taking or placing apparatus and no unoccupied storage layer exists in the at least two first storage layers.

Optionally, the controller is further configured to:
control, when a material obtained from the first storage layer exists on the goods taking or placing apparatus, the goods taking or placing apparatus to place the material on the to-be-placed goods conveying layer.

Optionally, the storage layer reached by the goods taking or placing apparatus for the first time during the movement is a to-be-taken material storage layer, and a to-be-taken material exists on the to-be-taken material storage layer.

Optionally, the controller is further configured to:
control the goods taking or placing apparatus to alternately move in a first vertical direction and a second vertical direction, where the movement in the first vertical direction includes: moving from a start storage layer to an end storage layer, and the movement in the second vertical direction includes: moving from the end storage layer to the start storage layer, where in an initial state, the start storage layer and the end storage layer are respectively an uppermost layer and a lowermost layer of the at least two first storage layers; and
respectively update the start storage layer and the end storage layer to an uppermost layer and a lowermost layer of a to-be-taken material storage layer after the material is placed on one of the first storage layers, where a to-be-taken material exists on the to-be-taken material storage layer.

Optionally, a temporary shelving unit is further arranged beside the conveyor, at least one second storage layer is arranged on the temporary shelving unit, and the second storage layer is configured for the material taken from the to-be-taken goods conveying layer to be placed.

Optionally, the controller is further configured to:
control, when a material exists on the to-be-taken goods conveying layer, no unoccupied storage layer exists in the at least two first storage layers, and an unoccupied storage layer exists in the second storage layers, the goods taking or placing apparatus to take the material from the to-be-taken goods conveying layer and place the material on the unoccupied storage layer in the second storage layers.

Optionally, the controller is further configured to:
control, when no material exists on the to-be-taken goods conveying layer, an unoccupied storage layer exists in the at least two first storage layers, and a material exists on the at least one second storage layer, the goods taking or placing apparatus to take the material from the second storage layer and place the material on the unoccupied storage layer in the first storage layers.

Optionally, the controller is further configured to:
control, when a material exists on the to-be-taken goods conveying layer and an unoccupied storage layer exists in the at least two first storage layers, the goods taking or placing apparatus to take the material from the to-be-taken goods conveying layer and place the material on the unoccupied storage layer in the first storage layers.

The unloading device provided in embodiment of this application is the apparatus embodiment corresponding to the method embodiment, and has the same technical effect as the method embodiment. For detailed description, reference may be made to the method embodiment, and the details are not described herein again.

An embodiment of this application further provides a computer-readable storage medium. The computer-readable storage medium stores computer-executable instructions therein, the computer-executable instructions, when executed by a processor, causing a computing device to implement the material conveying method.

An embodiment of this application further provides a computer program. The computer program is used for implementing the material conveying method.

## Claims

1. A material conveying method, applicable to an unloading device, wherein the unloading device comprises a robot (102) and a conveyor (101), the robot (102) comprises at least one goods taking or placing apparatus (1023) and at least two first storage layers (1024), and the conveyor (101) comprises a to-be-placed goods conveying layer (1011) and a to-be-taken goods conveying layer (1012) arranged in parallel from up to down;
wherein the to-be-placed goods conveying layer (1011) is configured to convey a material to a workstation, the workstation is configured to sort the material, and the to-be-taken goods conveying layer is configured to convey the sorted material; and
the material conveying method comprises:
controlling (S201) the at least one goods taking or placing apparatus (1023) to move in a direction perpendicular to the to-be-placed goods conveying layer (1011) and the to-be-taken goods conveying layer (1012);
the material conveying method is **characterized by** further comprising:
controlling (S202), when a material (103) obtained from the to-be-taken goods conveying layer (1012) exists on a goods taking or placing apparatus (1023), the goods taking or placing apparatus (1023) to place the material (103) on an unoccupied storage layer reached by the goods taking or placing apparatus (1023) for the first time during the movement; and
controlling, when no material exists on the goods taking or placing apparatus (1023) and no unoccupied storage layer exists in the at least two first storage layers (1024), the goods taking or placing apparatus (1023) to take a material (103) from the first storage layer (1024) reached for the first time during the movement, wherein the storage layer (1024) reached by the goods taking or placing apparatus (1023) for the first time during the movement is a to-be-taken material storage layer, and a to-be-taken material exists on the to-be-taken material storage layer.

2. The method according to claim 1, further comprising:
when no material exists on the at least one goods taking or placing apparatus (1023), at least one unoccupied storage layer exists in the at least two first storage layers (1024), and a material exists on the to-be-taken goods conveying layer (1012), controlling a goods taking or placing apparatus (1023) to take the material (103) from the to-be-taken goods conveying layer (1012).

3. The method according to claim 1 or 2, further comprising:
controlling, when a material (103) obtained from the first storage layer (1024) exists on a goods taking or placing apparatus (1023), the goods taking or placing apparatus (1023) to place the material on the to-be-placed goods conveying layer (1011).

4. The method according to claim 1, wherein the controlling the at least one goods taking or placing apparatus (1023) to move in a direction perpendicular to the to-be-placed goods conveying layer (1011) and the to-be-taken goods conveying layer (1012) comprises:
controlling the at least one goods taking or placing apparatus (1023) to alternately move in a first vertical direction and a second vertical direction, wherein the movement in the first vertical direction comprises moving from a start storage layer to an end storage layer, and the movement in the second vertical direction comprises moving from the end storage layer to the start storage layer, wherein in an initial state, the start storage layer is an uppermost layer of the at least two first storage layers (1024), and the end storage layer is a lowermost layer of the at least two first storage layers (1024); and
respectively updating the start storage layer and the end storage layer to an uppermost layer and a lowermost layer of a to-be-taken material storage layer after the material is placed on one of the first storage layers (1024), wherein a to-be-taken material exists on the to-be-taken material storage layer.

5. The method according to any one of claims 1 to 4, wherein a temporary shelving unit is further arranged beside the conveyor (101), at least one second storage layer is arranged on the temporary shelving unit, and the at least one second storage layer is configured for the material taken from the to-be-taken goods conveying layer (1012) to be placed.

6. The method according to claim 5, further comprising:
when a material (103) exists on the to-be-taken goods conveying layer (1012), no unoccupied storage layer exists in the at least two first storage layers (1024), and an unoccupied storage layer exists in the second storage layers, controlling a goods taking or placing apparatus (1023) to take the material (103) from the to-be-taken goods conveying layer (1012) and place the material (103) on the unoccupied storage layer in the second storage layers.

7. The method according to claim 5, further comprising:
when no material exists on the to-be-taken goods conveying layer (1012), an unoccupied storage layer exists in the at least two first storage layers (1024), and a material (103) exists on the at least one second storage layer, controlling a goods taking or placing apparatus (1023) to take the material (103) from the second storage layer and place the material on the unoccupied storage layer in the first storage layers (1024).

8. The method according to claim 5, further comprising:
when a material (103) exists on the to-be-taken goods conveying layer (1012) and an unoccupied storage layer exists in the at least two first storage layers (1024), controlling a goods taking or placing apparatus (1023) to take the material (103) from the to-be-taken goods conveying layer (1012) and place the material on the unoccupied storage layer in the first storage layers (1024).

9. The method according to any one of claims 1 to 8, further comprising:
when no material exists on the at least one goods taking or placing apparatus (1023), and at least one unoccupied storage layer exists in the at least two first storage layers (1024), detecting a quantity of materials on the to-be-taken goods conveying layer (1012); and
when the material quantity exceeds a preset material quantity threshold, controlling the goods taking or placing apparatus (1023) to take the material (103) from the to-be-taken goods conveying layer (1012); and when the material quantity does not exceed the preset material quantity threshold, controlling the goods taking or placing apparatus (1023) to take the material (103) from the to-be-taken goods conveying layer (1012) or take a material from the first storage layer (1024).

10. An unloading device, comprising a robot (102), a conveyor (101), and a controller, wherein the robot (102) comprises at least one goods taking or placing apparatus (1023) and at least two first storage layers (1024), and the conveyor (101) comprises a to-be-placed goods conveying layer (1011) and a to-be-taken goods conveying layer (1012) arranged in parallel from up to down;
wherein the to-be-placed goods conveying layer (1011) is configured to convey a material to a workstation, the workstation is configured to sort the material, and the to-be-taken goods conveying layer is configured to convey the sorted material; and
the controller is configured to
control the at least one goods taking or placing apparatus (1023) to move in a direction perpendicular to the to-be-placed goods conveying layer (1011) and the to-be-taken goods conveying layer (1012);
the unloading device is **characterized in that** the controller is further configured to:
control, when a material (103) obtained from the to-be-taken goods conveying layer (1012) exists on the goods taking or placing apparatus (1023), the goods taking or placing apparatus (1023) to place the material (103) on an unoccupied storage layer reached by the goods taking or placing apparatus (1023) for the first time during the movement; and
control, when no material exists on the goods taking or placing apparatus (1023) and no unoccupied storage layer exists in the at least two first storage layers (1024), the goods taking or placing apparatus (1023) to take a material (103) from the first storage layer (1024) reached for the first time during the movement, wherein the storage layer (1024) reached by the goods taking or placing apparatus (1023) for the first time during the movement is a to-be-taken material storage layer, and a to-be-taken material exists on the to-be-taken material storage layer.

11. A computer-readable storage medium, storing a computer-executable instruction, when executed by a processor, causing an unloading device according to claim 10, to implement the method according to any of claims 1 to 9.

## Patentansprüche

1. Materialförderverfahren, anwendbar auf eine Entladevorrichtung, wobei die Entladevorrichtung einen Roboter (102) und einen Förderer (101) umfasst, der Roboter (102) mindestens eine Warenentnahme- oder -ablagevorrichtung (1023) und mindestens zwei erste Lagerlagen (1024) umfasst und der Förderer (101) eine Förderlage für abzulegende Waren (1011) und eine Förderlage für zu entnehmende Waren (1012) umfasst, die parallel von oben nach unten angeordnet sind;
wobei die Förderlage für abzulegende Waren (1011) dazu konfiguriert ist, ein Material zu einer Arbeitsstation zu befördern, die Arbeitsstation dazu konfiguriert ist, das Material zu sortieren, und die Förderlage für zu entnehmende Waren dazu konfiguriert ist, das sortierte Material zu befördern; und
das Materialförderverfahren Folgendes umfasst:
Ansteuern (S201) der mindestens einen Warenentnahme- oder -ablagevorrichtung (1023), sich in einer Richtung senkrecht zur Förderlage für abzulegende Waren (1011) und zur Förderlage für zu entnehmende Waren (1012) zu bewegen;
das Materialförderverfahren **dadurch gekennzeichnet ist, dass** es ferner Folgendes umfasst:
wenn sich ein von der Förderlage für zu entnehmende Waren (1012) erhaltenes Material (103) auf einer Warenentnahme- oder -ablagevorrichtung (1023) befindet, Ansteuern (S202) der Warenentnahme- oder -ablagevorrichtung (1023), das Material (103) auf eine freie Lagerlage abzulegen, die von der Warenentnahme- oder -ablagevorrichtung (1023) während der Bewegung zum ersten Mal erreicht wird; und
wenn sich kein Material auf der Warenentnahme- oder -ablagevorrichtung (1023) befindet und keine freie Lagerlage in den mindestens zwei ersten Lagerlagen (1024) vorhanden ist, Ansteuern der Warenentnahme- oder -ablagevorrichtung (1023), ein Material (103) von der ersten Lagerlage (1024) zu entnehmen, die während der Bewegung zum ersten Mal erreicht wird, wobei die von der Warenentnahme- oder -ablagevorrichtung (1023) während der Bewegung zum ersten Mal erreichte Lagerlage (1024) eine Lagerlage für zu entnehmende Materialien ist und auf der Lagerlage für zu entnehmende Materialien ein zu entnehmendes Material vorhanden ist.

2. Verfahren nach Anspruch 1, umfassend ferner:
wenn sich kein Material auf der mindestens einen Warenentnahme- oder - ablagevorrichtung (1023) befindet, in den mindestens zwei ersten Lagerlagen (1024) mindestens eine freie Lagerlage vorhanden ist und sich ein Material auf der Förderlage für zu entnehmende Waren (1012) befindet, Ansteuern einer Warenentnahme- oder - ablagevorrichtung (1023), das Material (103) von der Förderlage für zu entnehmende Waren (1012) zu entnehmen.

3. Verfahren nach Anspruch 1 oder 2, umfassend ferner:
wenn sich ein von der ersten Lagerlage (1024) erhaltenes Material (103) auf einer Warenentnahme- oder -ablagevorrichtung (1023) befindet, Ansteuern der Warenentnahme- oder -ablagevorrichtung (1023), das Material auf die Förderlage für abzulegende Waren (1011) abzulegen.

4. Verfahren nach Anspruch 1, wobei das Ansteuern der mindestens einen Warenentnahme- oder -ablagevorrichtung (1023), sich in einer Richtung senkrecht zur Förderlage für abzulegende Waren (1011) und zur Förderlage für zu entnehmende Waren (1012) zu bewegen, Folgendes umfasst:
Ansteuern der mindestens einen Warenentnahme- oder -ablagevorrichtung (1023), sich abwechselnd in einer ersten vertikalen Richtung und einer zweiten vertikalen Richtung zu bewegen, wobei die Bewegung in der ersten vertikalen Richtung das Bewegen von einer Startlagerlage zu einer Endlagerlage und die Bewegung in der zweiten vertikalen Richtung das Bewegen von der Endlagerlage zur Startlagerlage umfasst, wobei in einem Anfangszustand die Startlagerlage eine oberste Lage der mindestens zwei ersten Lagerlagen (1024) und die Endlagerlage eine unterste Lage der mindestens zwei ersten Lagerlagen (1024) ist; und
Aktualisieren der Startlagerlage und der Endlagerlage jeweils zu einer obersten Lage bzw. einer untersten Lage einer Lagerlage für zu entnehmende Materialien nach dem Ablegen des Materials auf einer der ersten Lagerlagen (1024), wobei auf der Lagerlage für zu entnehmende Materialien ein zu entnehmendes Material vorhanden ist.

5. Verfahren nach einem der Ansprüche 1 bis 4, wobei neben dem Förderer (101) ferner eine Zwischenregaleinheit angeordnet ist, auf der Zwischenregaleinheit mindestens eine zweite Lagerlage angeordnet ist und die mindestens eine zweite Lagerlage so konfiguriert ist, dass das von der Förderlage für zu entnehmende Waren (1012) entnommene Material darauf abgelegt werden kann.

6. Verfahren nach Anspruch 5, umfassend ferner:
wenn sich ein Material (103) auf der Förderlage für zu entnehmende Waren (1012) befindet, keine freie Lagerlage in den mindestens zwei ersten Lagerlagen (1024) vorhanden ist und eine freie Lagerlage in den zweiten Lagerlagen vorhanden ist, Ansteuern einer Warenentnahme- oder -ablagevorrichtung (1023), das Material (103) von der Förderlage für zu entnehmende Waren (1012) zu entnehmen und das Material (103) auf die freie Lagerlage in den zweiten Lagerlagen abzulegen.

7. Verfahren nach Anspruch 5, umfassend ferner:
wenn sich kein Material auf der Förderlage für zu entnehmende Waren (1012) befindet, eine freie Lagerlage in den mindestens zwei ersten Lagerlagen (1024) vorhanden ist und sich ein Material (103) auf der mindestens einen zweiten Lagerlage befindet, Ansteuern einer Warenentnahme- oder -ablagevorrichtung (1023), das Material (103) von der zweiten Lagerlage zu entnehmen und das Material auf die freie Lagerlage in den ersten Lagerlagen (1024) abzulegen.

8. Verfahren nach Anspruch 5, umfassend ferner:
wenn sich ein Material (103) auf der Förderlage für zu entnehmende Waren (1012) befindet und eine freie Lagerlage in den mindestens zwei ersten Lagerlagen (1024) vorhanden ist, Ansteuern einer Warenentnahme- oder -ablagevorrichtung (1023), das Material (103) von der Förderlage für zu entnehmende Waren (1012) zu entnehmen und das Material auf die freie Lagerlage in den ersten Lagerlagen (1024) abzulegen.

9. Verfahren nach einem der Ansprüche 1 bis 8, umfassend ferner:
wenn sich kein Material auf der mindestens einen Warenentnahme- oder - ablagevorrichtung (1023) befindet und mindestens eine freie Lagerlage in den mindestens zwei ersten Lagerlagen (1024) vorhanden ist, Erfassen einer Menge an Materialien auf der Förderlage für zu entnehmende Waren (1012); und
wenn die Materialmenge einen voreingestellten Materialmengenschwellenwert überschreitet, Ansteuern der Warenentnahme- oder -ablagevorrichtung (1023), das Material (103) von der Förderlage für zu entnehmende Waren (1012) zu entnehmen; und wenn die Materialmenge den voreingestellten Materialmengenschwellenwert nicht überschreitet, Ansteuern der Warenentnahme- oder -ablagevorrichtung (1023), das Material (103) von der Förderlage für zu entnehmende Waren (1012) zu entnehmen oder ein Material von der ersten Lagerlage (1024) zu entnehmen.

10. Entladevorrichtung, umfassend einen Roboter (102), einen Förderer (101) und eine Steuerung, wobei der Roboter (102) mindestens eine Warenentnahme- oder -ablagevorrichtung (1023) und mindestens zwei erste Lagerlagen (1024) umfasst und der Förderer (101) eine Förderlage für abzulegende Waren (1011) und eine Förderlage für zu entnehmende Waren (1012) umfasst, die parallel von oben nach unten angeordnet sind;
wobei die Förderlage für abzulegende Waren (1011) dazu konfiguriert ist, Material zu einer Arbeitsstation zu befördern, die Arbeitsstation dazu konfiguriert ist, das Material zu sortieren, und die Förderlage für zu entnehmende Waren dazu konfiguriert ist, das sortierte Material zu befördern; und
die Steuerung so konfiguriert ist, dass sie die mindestens eine Warenentnahme- oder - ablagevorrichtung (1023) dazu ansteuert, sich in einer Richtung senkrecht zur Förderlage für abzulegende Waren (1011) und zur Förderlage für zu entnehmende Waren (1012) zu bewegen;
die Entladevorrichtung **dadurch gekennzeichnet ist, dass** die Steuerung ferner dazu konfiguriert ist,
wenn sich ein von der Förderlage für zu entnehmende Waren (1012) erhaltenes Material (103) auf der Warenentnahme- oder -ablagevorrichtung (1023) befindet, die Warenentnahme- oder -ablagevorrichtung (1023) dazu anzusteuern, das Material (103) auf eine freie Lagerlage abzulegen, die von der Warenentnahme- oder -ablagevorrichtung (1023) während der Bewegung zum ersten Mal erreicht wird; und
wenn sich kein Material auf der Warenentnahme- oder -ablagevorrichtung (1023) befindet und keine freie Lagerlage in den mindestens zwei ersten Lagerlagen (1024) vorhanden ist, die Warenentnahme- oder -ablagevorrichtung (1023) dazu anzusteuern, ein Material (103) von der ersten Lagerlage (1024) zu entnehmen, die während der Bewegung zum ersten Mal erreicht wird, wobei die von der Warenentnahme- oder -ablagevorrichtung (1023) während der Bewegung zum ersten Mal erreichte Lagerlage (1024) eine Lagerlage für zu entnehmende Materialien ist und auf der Lagerlage für zu entnehmende Materialien ein zu entnehmendes Material vorhanden ist.

11. Computerlesbares Speichermedium, auf dem eine computerausführbare Anweisung gespeichert ist, die bei Ausführung durch einen Prozessor bewirkt, dass eine Entladevorrichtung nach Anspruch 10 das Verfahren nach einem der Ansprüche 1 bis 9 implementiert.

## Revendications

1. Procédé de transport de matériau, applicable à un dispositif de déchargement, dans lequel le dispositif de déchargement comprend un robot (102) et un convoyeur (101), le robot (102) comprend au moins un appareil de prise ou de pose de marchandises (1023) et au moins deux premières couches de stockage (1024), et le convoyeur (101) comprend une couche de transport de marchandises à poser (1011) et une couche de transport de marchandises à prendre (1012) disposées en parallèle de haut en bas ;
dans lequel la couche de transport de marchandises à poser (1011) est configurée pour transporter un matériau vers un poste de travail, le poste de travail est configuré pour trier le matériau, et la couche de transport de marchandises à prendre est configurée pour transporter le matériau trié ; et
le procédé de transport de matériau comprend :
commander (S201) au moins un appareil de prise ou de pose de marchandises (1023) pour se déplacer dans une direction perpendiculaire à la couche de transport de marchandises à poser (1011) et à la couche de transport de marchandises à prendre (1012) ;
le procédé de transport de matériau est **caractérisé en ce qu'**il comprend en outre :
commander (S202), lorsqu'un matériau (103) obtenu à partir de la couche de transport de marchandises à prendre (1012) est présent sur un appareil de prise ou de pose de marchandises (1023), l'appareil de prise ou de pose de marchandises (1023) pour déposer le matériau (103) sur une couche de stockage inoccupée atteinte par l'appareil de prise ou de pose de marchandises (1023) pour la première fois pendant le mouvement ; et
commander, lorsqu'aucun matériau n'est présent sur l'appareil de prise ou de pose de marchandises (1023) et qu'aucune couche de stockage inoccupée n'existe parmi les au moins deux premières couches de stockage (1024), l'appareil de prise ou de pose de marchandises (1023) pour prendre un matériau (103) à partir de la première couche de stockage (1024) atteinte pour la première fois pendant le mouvement, dans lequel la couche de stockage (1024) atteinte par l'appareil de prise ou de pose de marchandises (1023) pour la première fois pendant le mouvement est une couche de stockage de matériau à prendre, et un matériau à prendre est présent sur la couche de stockage de matériau à prendre.

2. Procédé selon la revendication 1, comprenant en outre :
lorsqu'aucun matériau n'est présent sur au moins un appareil de prise ou de pose de marchandises (1023), qu'au moins une couche de stockage inoccupée existe parmi les au moins deux premières couches de stockage (1024), et qu'un matériau est présent sur la couche de transport de marchandises à prendre (1012), commander un appareil de prise ou de pose de marchandises (1023) pour prendre le matériau (103) à partir de la couche de transport de marchandises à prendre (1012).

3. Procédé selon la revendication 1 ou 2, comprenant en outre :
commander, lorsqu'un matériau (103) obtenu à partir de la première couche de stockage (1024) est présent sur un appareil de prise ou de pose de marchandises (1023), l'appareil de prise ou de pose de marchandises (1023) pour déposer le matériau sur la couche de transport de marchandises à poser (1011).

4. Procédé selon la revendication 1, dans lequel la commande d'au moins un appareil de prise ou de pose de marchandises (1023) pour se déplacer dans une direction perpendiculaire à la couche de transport de marchandises à poser (1011) et à la couche de transport de marchandises à prendre (1012) comprend :
commander au moins un appareil de prise ou de pose de marchandises (1023) pour se déplacer alternativement dans une première direction verticale et une deuxième direction verticale, dans lequel le mouvement dans la première direction verticale comprend le déplacement depuis une couche de stockage de départ vers une couche de stockage d'arrivée, et le mouvement dans la deuxième direction verticale comprend le déplacement depuis la couche de stockage d'arrivée vers la couche de stockage de départ, dans lequel, dans un état initial, la couche de stockage de départ est une couche la plus haute parmi les au moins deux premières couches de stockage (1024), et la couche de stockage d'arrivée est une couche la plus basse parmi les au moins deux premières couches de stockage (1024) ; et
mettre à jour respectivement la couche de stockage de départ et la couche de stockage d'arrivée vers une couche la plus haute et une couche la plus basse d'une couche de stockage de matériau à prendre après que le matériau est déposé sur l'une des premières couches de stockage (1024), dans lequel un matériau à prendre est présent sur la couche de stockage de matériau à prendre.

5. Procédé selon l'une quelconque des revendications 1 à 4, dans lequel une unité de rayonnage temporaire est en outre disposée à côté du convoyeur (101), au moins une deuxième couche de stockage est disposée sur l'unité de rayonnage temporaire, et au moins une deuxième couche de stockage est configurée pour que le matériau retiré de la couche de transport de marchandises à prendre (1012) y soit déposé.

6. Procédé selon la revendication 5, comprenant en outre :
lorsqu'un matériau (103) est présent sur la couche de transport de marchandises à prendre (1012), qu'aucune couche de stockage inoccupée n'existe parmi les au moins deux premières couches de stockage (1024), et qu'une couche de stockage inoccupée existe parmi les deuxièmes couches de stockage, commander un appareil de prise ou de pose de marchandises (1023) pour prendre le matériau (103) à partir de la couche de transport de marchandises à prendre (1012) et déposer le matériau (103) sur la couche de stockage inoccupée parmi les deuxièmes couches de stockage.

7. Procédé selon la revendication 5, comprenant en outre :
lorsqu'aucun matériau n'est présent sur la couche de transport de marchandises à prendre (1012), qu'une couche de stockage inoccupée existe parmi les au moins deux premières couches de stockage (1024), et qu'un matériau (103) est présent sur au moins une deuxième couche de stockage, commander un appareil de prise ou de pose de marchandises (1023) pour prendre le matériau (103) à partir de la deuxième couche de stockage et déposer le matériau sur la couche de stockage inoccupée parmi les premières couches de stockage (1024).

8. Procédé selon la revendication 5, comprenant en outre :
lorsqu'un matériau (103) est présent sur la couche de transport de marchandises à prendre (1012) et qu'une couche de stockage inoccupée existe parmi les au moins deux premières couches de stockage (1024), commander un appareil de prise ou de pose de marchandises (1023) pour prendre le matériau (103) à partir de la couche de transport de marchandises à prendre (1012) et déposer le matériau sur la couche de stockage inoccupée parmi les premières couches de stockage (1024).

9. Procédé selon l'une quelconque des revendications 1 à 8, comprenant en outre :
lorsqu'aucun matériau n'est présent sur au moins un appareil de prise ou de pose de marchandises (1023) et qu'au moins une couche de stockage inoccupée existe parmi les au moins deux premières couches de stockage (1024), détecter une quantité de matériaux sur la couche de transport de marchandises à prendre (1012) ; et
lorsque la quantité de matériaux dépasse un seuil de quantité de matériaux prédéfini, commander l'appareil de prise ou de pose de marchandises (1023) pour prendre le matériau (103) à partir de la couche de transport de marchandises à prendre (1012) ; et lorsque la quantité de matériaux ne dépasse pas le seuil de quantité de matériaux prédéfini, commander l'appareil de prise ou de pose de marchandises (1023) pour prendre le matériau (103) à partir de la couche de transport de marchandises à prendre (1012) ou prendre un matériau à partir de la première couche de stockage (1024).

10. Dispositif de déchargement, comprenant un robot (102), un convoyeur (101) et un contrôleur, dans lequel le robot (102) comprend au moins un appareil de prise ou de pose de marchandises (1023) et au moins deux premières couches de stockage (1024), et le convoyeur (101) comprend une couche de transport de marchandises à poser (1011) et une couche de transport de marchandises à prendre (1012) disposées en parallèle de haut en bas ;
dans lequel la couche de transport de marchandises à poser (1011) est configurée pour transporter un matériau vers un poste de travail, le poste de travail est configuré pour trier le matériau, et la couche de transport de marchandises à prendre est configurée pour transporter le matériau trié ; et
le contrôleur est configuré pour commander au moins un appareil de prise ou de pose de marchandises (1023) pour se déplacer dans une direction perpendiculaire à la couche de transport de marchandises à poser (1011) et à la couche de transport de marchandises à prendre (1012) ;
le dispositif de déchargement est **caractérisé en ce que** le contrôleur est en outre configuré pour :
commander, lorsqu'un matériau (103) obtenu à partir de la couche de transport de marchandises à prendre (1012) est présent sur l'appareil de prise ou de pose de marchandises (1023), l'appareil de prise ou de pose de marchandises (1023) pour déposer le matériau (103) sur une couche de stockage inoccupée atteinte par l'appareil de prise ou de pose de marchandises (1023) pour la première fois pendant le mouvement ; et
commander, lorsqu'aucun matériau n'est présent sur l'appareil de prise ou de pose de marchandises (1023) et qu'aucune couche de stockage inoccupée n'existe parmi les au moins deux premières couches de stockage (1024), l'appareil de prise ou de pose de marchandises (1023) pour prendre un matériau (103) à partir de la première couche de stockage (1024) atteinte pour la première fois pendant le mouvement, dans lequel la couche de stockage (1024) atteinte par l'appareil de prise ou de pose de marchandises (1023) pour la première fois pendant le mouvement est une couche de stockage de matériau à prendre, et un matériau à prendre est présent sur la couche de stockage de matériau à prendre.

11. Support de stockage lisible par ordinateur, stockant une instruction exécutable par ordinateur qui, lorsqu'elle est exécutée par un processeur, amène un dispositif de déchargement selon la revendication 10, à mettre en œuvre le procédé selon l'une quelconque des revendications 1 à 9.
